# EUROPEAN PATENT APPLICATION

(11) **EP 2 163 971 A2**
(43) Date of publication of application: **17.03.2010**
(21) Application number: 09170043.5
(22) Date of filing: 11.09.2009
(51) Int. Cl.: G06F 3/045

(54) **Touch panel with window for observing dispenser injection state and manufacturing method thereof**

(30) Priority: 12.09.2008 KR 20080090329
(71) Applicant: ILJIN Display Co., Ltd., Gyeonggi-do (KR)
(72) Inventor: Kim, Jin-Su, Seoul (KR); Lee, Gyu-Lin, Seoul (KR); Han, Chang-Kyun, Gyeonggi-Do (KR)
(74) Representative: HOFFMANN EITLE

(57) **Abstract**

The present invention relates to a touch panel and a manufacturing method thereof which can precisely regulate amount of electrically conductive material which is injected for forming a dispenser of a touch panel. A touch panel includes: an upper substrate on a bottom surface of which an upper transparent conductive layer is patterned and which has a plurality of upper electrodes; an lower substrate on an top surface of which a lower transparent conductive layer is patterned and which has a plurality of a lower electrodes; a dot spacer which is formed on a top surface of the lower transparent conductive layer; a double-sided adhesive tape which is adhered respectively to the upper electrode and the lower electrode to attach the upper substrate and the lower substrate together; and a dispenser which electrically connects a portion of the plurality of the upper electrodes and a portion of the plurality of the lower electrodes. The double-sided adhesive tape forms a space which elongates vertically in which the dispenser is disposed, through holes which communicate with the space in which the dispenser is disposed are respectively formed in the lower substrate, the lower transparent conductive layer, and the lower electrode, and the lower electrode comprises a window which is located near the through hole and where an electrode is not formed.

## Description

### [Technical Field]

The present invention relates to a touch panel and a manufacturing method thereof. More particularly, the present invention relates to a touch panel and a manufacturing method thereof which can precisely regulate amount of electrically conductive material which is injected for forming a dispenser of a touch panel.

### [Background Art]

A touch panel is widely used as an input device of various electronic devices.

A touch panel is generally used by being integrated with an image display device such as a flat display device and operates by being touched at a specific point by a finger, a pen, or the like. Such a touch panel includes various types such as a resistive type which is composed of two resistive sheets which are separated from one another by a dot spacer and are able to be pushed to contact one another, a capacitive type, an ultrasonic wave type, a light (infrared ray) type, a sensor type, and an electron induction type.

The resistive type touch panel among various types is widely used together with a liquid crystal display panel as an input device of an electronic scheduler, a PDA (personal digital assistance), portable PC, or the like, and has advantages of being thin, small, light weight, and low energy consumption over other types. The resistive type touch panel can be divided into a matrix type and an analog type depending on detection method, and the analog type can be divided into a 4-wire resistive type, a 5-wire resistive type, and an 8-wire resistive type depending on electrode configuration for detecting touch point.

The resistive type touch panel having electrodes for detecting touch point is generally provided with a plurality of electrodes in an upper substrate and a lower substrate, and each electrode is formed to be electrically separated. In more particular, an upper transparent conductive layer is patterned on a bottom surface of the upper substrate and a plurality of upper electrodes are printed on a bottom surface of the upper transparent conductive layer, and a lower transparent conductive layer is patterned on a top surface of the lower substrate and a lower electrode is printed on a top surface of the lower transparent conductive layer, and the upper substrate and the lower substrate are attached to one another by adhering a double-sided adhesive tape to a bottom surface of the upper electrode and a top surface of the lower electrode.

At this time, the upper electrode is formed along an edge of the upper substrate and the lower electrode is formed along an edge of the lower substrate, and the upper electrodes are spaced from one another to be electrically separated from one another, and similarly the lower electrodes are spaced from one another to be electrically separated from one another.

And the upper substrate and the lower substrate are attached to one another by adhering the bottom surface of the upper electrode and the top surface of the lower electrode by a double-sided adhesive tape.

Subsequently, a dispenser which electrically connects at least a portion of the lower electrodes and at least a portion of the upper electrodes is formed. Generally, an empty space for forming the dispenser is formed in the double-sided adhesive tape by vertically penetrating the same, and a dispenser having electrical conductivity is filled in the space, thereby electrically connecting at least a portion of the lower electrodes and at least a portion of the upper electrodes.

In case that the dispenser is formed by injection type, a through hole via which electrically conductive material is injected is formed in the lower substrate. That is, the dispenser may be formed by injecting electrically conductive material in a liquid state via the through hole of the lower substrate after the upper electrode and the lower electrode are formed on the upper substrate and the lower substrate and the upper substrate and the lower substrate are attached to one another by the double-sided adhesive tape and then hardening the injected electrically conductive material.

In case that the dispenser is formed by injection type, suitable amount of electrically conductive material in a liquid state should be injected into a space formed by a bottom surface of the upper electrode, the double-sided adhesive tape, and a top surface of the lower electrode, but there is a problem in that it is difficult to precisely regulate amount of the injected electrically conductive material. If amount of electrically conductive material is too small, the upper electrode and the lower electrode may not be electrically connected, and on the other hand, if amount of electrically conductive material is too large, gap between the upper electrode and the lower electrode becomes greater and this may cause inferior goods.

### [Disclosure]

### [Technical Problem]

The present invention has been made in an effort to provide a touch panel and a manufacturing method thereof in which amount of injection of electrically conductive material which is injected for forming a dispenser which electrically connects an electrode of an upper substrate and an electrode of a lower substrate can be precisely regulated.

### [Technical Solution]

An exemplary touch panel according to an embodiment of the present invention includes: an upper substrate on a bottom surface of which an upper transparent conductive layer is patterned and which has a plurality of upper electrodes; a lower substrate on an top surface of which a lower transparent conductive layer is patterned and which has a plurality of a lower electrodes; a dot spacer which is formed on a top surface of the lower transparent conductive layer; a double-sided adhesive tape which is adhered respectively to the upper electrode and the lower electrode to attach the upper substrate and the lower substrate together; and a dispenser which electrically connects a portion of the plurality of the upper electrodes and a portion of the plurality of the lower electrodes. The double-sided adhesive tape forms a space which elongates vertically in which the dispenser is disposed, through holes which communicate with the space in which the dispenser is disposed are respectively formed in the lower substrate, the lower transparent conductive layer, and the lower electrode, and the lower electrode comprises a window which is located near the through hole and where an electrode is not formed.

The window may be elongated to an outside direction of the space in which the dispenser is disposed near the through hole which is formed in the lower electrode.

The window may be provided as a plural and the plural windows may be radially arranged.

An exemplary method for manufacturing a touch panel according to an embodiment of the present invention includes: patterning an upper transparent conductive layer on a bottom surface of an upper substrate; forming a plurality of upper electrodes on a bottom surface of the upper transparent conductive layer; patterning a lower transparent conductive layer on a top surface of a lower substrate; forming a plurality of lower electrodes on a top surface of the lower transparent conductive layer; forming a dot spacer on a top surface of the lower transparent conductive layer of the lower substrate; attaching the upper substrate and the lower substrate together by adhering a double-sided adhesive tape to the upper electrode and the lower electrode respectively; and forming a dispenser which electrically connects a portion of the plurality of the upper electrodes and the a portion of the plurality of the lower electrodes. The double adhesive tape forms a space which elongates vertically in which the dispenser is disposed, through holes which communicate with the space in which the dispenser is disposed are respectively formed in the lower substrate, the lower transparent conductive layer, and the lower electrode, and the lower electrode comprises a window which is located near the through hole and where an electrode is not formed.

### [Advantageous Effects]

According to the present invention, since a window is formed near a through hole which is formed in a lower electrode for injecting electrically conductive material for forming a dispenser, injection level of electrically conductive material for forming a dispenser can be observed from the outside while electrically conductive material for forming a dispenser is being injected, so injection level of electrically conductive material can be precisely regulated.

### [Brief Description of Drawings]

FIG. 1 is a perspective view of a touch panel according to an embodiment of the present invention.
FIG. 2 is an exploded perspective view of a touch panel according to an embodiment of the present invention.
FIG. 3 is a cross-sectional view taken along a line III-III in FIG. 1.
FIG. 4 is a cross-sectional view taken along a line IV-IV in FIG. 1.
FIG. 5 is a drawing for explaining shape and function of a window which is formed at a lower electrode of a touch panel according to an embodiment of the present invention.

### [Detailed Description of the embodiments]

Exemplary embodiment of the present invention will hereinafter be described in detail with reference to the drawing.

In the drawings, the thickness of layers, films, panels, regions, etc. are exaggerated for clarity. Like reference numerals designate like elements throughout the specification. It will be understood that when an element such as a layer, film, region or substrate is referred to as being "on" another element, it can be directly on the other element or intervening elements may also be present. In contrast, when an element is referred to as being "directly on" another element, there are no intervening elements present.

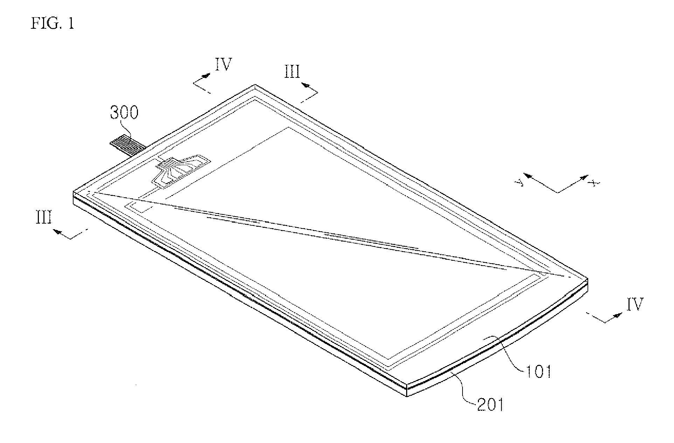

First, referring to FIG. 1, a touch panel according to an embodiment of the present invention includes an upper substrate 101 and a lower substrate 201.

The upper substrate 101 and the lower substrate 201 may be made of transparent material which is electrically non-conductive, and for example, transparent material such as PET (polyethylene terephthalate) film or thin glass.

The upper substrate 101 and the lower substrate 201 are attached to one another in a state that a flexible printed circuit (FPC) 300 which includes electrodes for applying electrical signal is fitted between the upper substrate 101 and the lower substrate 201.

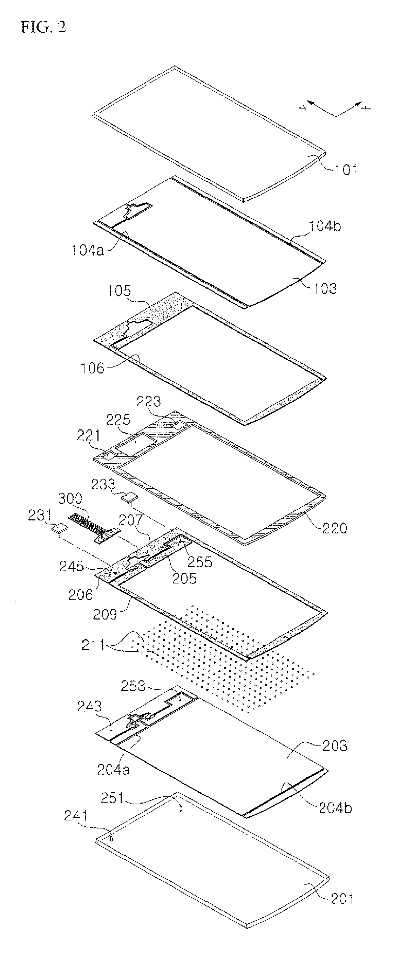

Hereinafter, a touch panel and a method for manufacturing thereof according to an embodiment of the present invention will be explained in detail with reference to FIG. 2 to FIG. 5.

Referring to FIG. 2 to FIG. 4, an upper transparent conductive layer 103 is patterned on a bottom surface of the upper substrate 101 and a plurality of upper electrodes 105 and 106 are formed. That is, the upper transparent conductive layer 103 is formed on a bottom surface of the upper substrate 101 and the upper electrodes 105 and 106 are formed on a bottom surface of the upper transparent conductive layer 103.

The upper transparent conductive layer 103 is made of transparent material having electrical conductivity such as ITO (indium tin oxide). At this time, the upper transparent conductive layer 103 is patterned depending on shapes of the upper electrodes 105 and 106 which will be formed on a bottom thereof. For example, the upper transparent conductive layer 103 may be patterned such that the plurality of the upper electrodes 105 and 106 are electrically separated from one another.

Meanwhile, referring to FIG. 2 to FIG. 4, a lower transparent conductive layer 203 is patterned on a top surface of the lower substrate 201 and a plurality of lower electrodes 205, 206, 207 and 209 are formed. That is, the lower transparent conductive layer 203 is formed on a top surface of the lower substrate 201 and the lower electrodes 205, 206, 207 and 209 are formed on a top surface of the lower transparent conductive layer 203.

The lower transparent conductive layer 203 is made of transparent material having electrical conductivity such as ITO (indium tin oxide). At this time, the lower transparent conductive layer 203 is patterned depending on shapes of the lower electrodes 205, 206, 207 and 209 which will be formed on a top thereof. For example, the lower transparent conductive layer 203 may be patterned such that the plurality of the lower electrodes 205, 206, 207 and 209 are electrically separated from one another.

At this time, as shown in FIG. 2, the upper electrodes 105 and 106 may be arranged to substantially enclose an active area of a touch panel, and the lower electrodes 205, 206, 207 and 209 may also be arranged to substantially enclose an active area of a touch panel.

The upper electrodes 105 and 106 and the lower electrodes 205, 206, 207 and 209 may be made of metal having a high electrical conductivity and for example may be formed by printing silver.

A dot spacer 211 is formed on a top surface of the lower transparent conductive layer 203. Meanwhile, the dot spacer 211 may be formed before the lower electrodes 205, 206, 207 and 209 are formed on the lower transparent conductive layer 203. The dot spacer 211 performs a role of maintaining relevant gap between the upper transparent conductive layer 103 and the lower transparent conductive layer 203 and may be formed of polymer having suitable elasticity. For example, the dot spacer 211 may be formed by a screen printing method.

The upper substrate 101 and the lower substrate 201 are attached to one another by a double-sided adhesive tape 220 which is electrically non-conductive. That is, as shown in the drawing, the double-sided adhesive tape 220 are adhered to the upper electrodes 105 and 106 and the lower electrodes 205, 206, 207 and 209 respectively so that the upper substrate 101 and the lower substrate 201 are attached to one another. At this time, as shown in FIG. 2, the double-sided adhesive tape 220 may be shaped to be empty at area corresponding to an active area of a touch panel and to enclose the outside of the same.

Meanwhile, a touch panel according to an embodiment of the present invention includes dispensers 231 and 233 which electrically connect a portion of the upper electrodes 105 and 105 and a portion of the lower electrodes 205, 206, 207 and 209 together.

An example of the structure of electrodes will be explained hereinafter with reference to the drawings.

First, the lower electrodes 205, 206, 207 and 209 are provided as two pairs. Each terminal of the two pairs of the lower electrodes 205, 206, 207 and 209 are electrically connected to terminals of the FPC 300 which is connected to an external electrical power source. A through hole 225 may be formed at an area of the double-sided adhesive tape 220 corresponding to an area where the FPC 300 is located.

More particularly, a pair of electrodes which are designated by reference numeral 207 and 209 among the lower electrodes 205, 206, 207 and 209 are provided to apply electricity along an X-axis direction to an active area of the lower transparent conductive layer 230. For this function, the electrodes 207 and 209 include portions which are extended along a Y-axis direction. At this time, as shown in FIG. 2, separation lines 204a and 204b which are extended along an X-axis direction are formed at the lower transparent conductive layer 203, and both sides of the lower transparent conductive layer 230 which are separated by the separation lines 204a and 204b are electrically separated from each other, so when electricity is applied to the electrodes 207 and 209, electrical current flows only along an X-axis direction of the active area of the lower transparent conductive layer 203.

Meanwhile, a pair of the electrodes 105 and 106 are formed on the upper substrate 101. At this time, the electrodes which are designated by reference numerals 205 and 206 among the lower electrodes 205, 206, 207 and 209 are respectively electrically connected to the electrodes 105 and 106 of the upper substrate 101 via the dispensers 231 and 233. For this, the dispensers 231 and 233 are made of electrically conductive material and lower ends thereof contact respectively the electrodes which are designated by reference numerals 206 and 205 among the lower electrodes 205, 206, 207 and 209 and upper ends thereof contact respectively the upper electrodes 106 and 105 of the upper substrate 101. For this configuration, as shown in the drawing, through holes 221 and 231 which are elongated in a vertical direction, being spaces in which the dispensers 231 and 233 are disposed respectively, are formed in the double-sided adhesive tape 220, and through holes 245 and 255 are formed in the electrodes which are designated by reference numerals 206 and 205. The through holes 245 and 255 communicate with the through holes 221 and 231 of the double-sided adhesive tape 220, respectively.

The dispensers 231 and 233 are respectively filled in the through holes 221 and 223 of the double-sided adhesive tape 220 and the through holes 245 and 255 which are formed in the electrodes designated by reference numerals 206 and 205, so the electrodes designated by reference numerals 206 and 205 are electrically connected to the upper electrodes 106 and 105 respectively.

Meanwhile, the dispensers 231 and 233 may be formed by injecting electrically conductive material in a liquid state into the through holes 221 and 223 of the double-sided adhesive tape 220 and the through holes 245 and 255 which are formed in the lower electrodes 206 and 205 after attaching the upper substrate 101 and the lower substrate 201 together and then hardening the injected electrically conductive material, and in order to inject the electrically conductive material in a liquid state, as shown in FIG. 2, through holes 241 and 251 may be formed in the lower substrate 201 at corresponding locations and through holes 243 and 253 may be formed in the lower transparent conductive layer 203 at corresponding locations. The through holes 241 and 243 communicate with the through hole 245 of the lower electrode 206 and the through hole 221 of the double-sided adhesive tape 220, and the through holes 251 and 253 communicate with the through hole 255 of the lower electrode 206 and the through hole 223 of the double-sided adhesive tape 220.

Under these configurations, by injecting electrically conductive material in a liquid state via the through holes 241 and 251 of the lower substrate 201 and hardening the injected electrically conductive material in a state that the upper substrate 101 and the lower substrate 201 are attached to one another by the double-sided adhesive tape 220, the dispensers 231 and 233 can be formed.

Meanwhile, the upper electrodes 106 and 105 which are electrically connected to the electrodes designated by reference numerals 206 and 205 among the lower electrodes 205, 206, 207 and 209 via the dispensers 231 and 233 are formed to apply electricity such that electrical current flows in an active area of the upper transparent conductive layer 103 along an Y-axis direction. For this, the upper electrodes 105 and 106 includes portions which are extended along an X-axis direction, respectively. At this time, as shown in FIG. 2, separation lines 104a and 104b which are extended along a Y-axis direction are formed at the upper transparent conductive layer 103, and both sides of the upper transparent conductive layer 103 which are separated by the separation lines 104a and 104b are electrically separated from each other, so when electricity is applied to the electrodes 105 and 106, electrical current flows only along an Y-axis direction of the active area of the upper transparent conductive layer 103.

For example, in case that specific point in an active area of a touch panel is touched so that the upper transparent conductive layer 103 and the lower transparent conductive layer 203 are electrically connected at the corresponding point, Y-axis coordinate of the touched point can be calculated by using sensed electrical signal of X-axis direction current of the lower transparent conductive layer 203 and X-axis coordinate of the touched point can be calculated by using sensed Y-axis direction current of the upper transparent conductive layer 103. A method for calculating coordinates of a touched point under such electrode configuration is obvious to a person having ordinary skill in the art, so further detailed explanation for the same will be omitted.

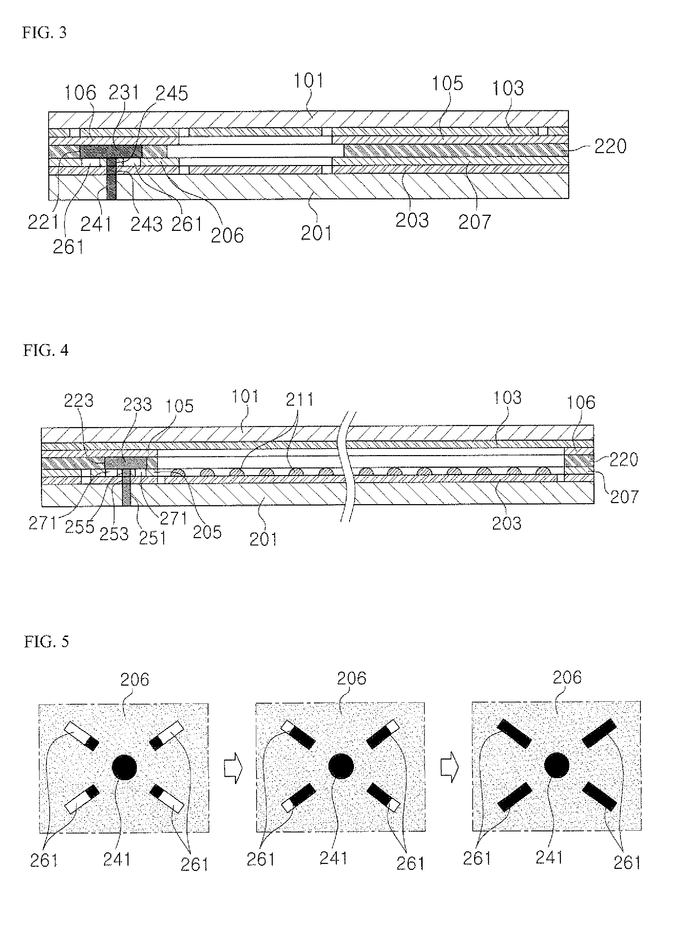

Meanwhile, in an embodiment of the present invention, as shown in FIG. 3 to FIG. 5, windows 261 and 271 are formed near the through holes 245 and 255 of the lower electrodes 206 and 205. The lower electrodes 206 and 205 are formed of opaque material such as silver, and the windows 261 and 271 indicates portions where opaque material such as silver is not formed. Accordingly, when a touch panel is seen from its bottom side, the through holes 221 and 231 which are formed in the double-sided adhesive tape 220 can be seen through the transparent lower substrate 201, the lower transparent conductive layer 203, and the windows 261 and 271 which are formed in the lower electrodes 206 and 205. Since the dispensers 231 and 233 are formed within the through holes 221 and 223 which are formed in the double-sided adhesive tape 220, level of filling of the electrically conductive material in a liquid state for forming the dispensers 231 and 233 in the through holes 221 and 231 of the double-sided adhesive tape 220 can be observed by the naked eye from the outside while electrically conductive material in a liquid state for forming the dispensers 231 and 233 is being injected. Accordingly, amount of the injected electrically conductive material for forming the dispensers 231 and 233 can be precisely regulated.

At this time, as shown in FIG. 5, the windows 261 and 271 may be formed to be elongated to an outside direction of a space (described by a dotted line in FIG. 5) where the dispensers 231 and 233 are disposed near the through holes 245 and 255 which are formed in the lower electrodes 206 and 205. Accordingly, the state that the electrically conductive material which is injected via the through holes 245 and 255 spreads in the space defined by the through holes 221 and 223 of the double-sided adhesive tape 220 can be easily observed through the windows 261 and 271. In addition, as shown in FIG. 5, the windows 261 and 271 may be provided as a plural, and the plural windows 261 and 271 can be radially arranged as shown in FIG. 5. Meanwhile, not shown in the drawing, shape and size of the window which is formed in the lower electrode can be varied without departing from the scope of the present invention.

Although the window is formed in the lower electrode with an example of electrode structure of a 4-wire resistive type touch panel, the present invention can be applied to any resistive type touch panel such as a 5-wire resistive type touch panel or an 8-wire resistive type touch panel only if the window is formed near the through hole of the lower electrode.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

## Claims

1. A touch panel comprising:
an upper substrate on a bottom surface of which an upper transparent conductive layer is patterned and which has a plurality of upper electrodes;
a lower substrate on an top surface of which a lower transparent conductive layer is patterned and which has a plurality of a lower electrodes;
a dot spacer which is formed on a top surface of the lower transparent conductive layer;
a double-sided adhesive tape which is adhered respectively to the upper electrode and the lower electrode to attach the upper substrate and the lower substrate together; and
a dispenser which electrically connects a portion of the plurality of the upper electrodes and a portion of the plurality of the lower electrodes,
wherein the double-sided adhesive tape forms a space which elongates vertically
in which the dispenser is disposed, through holes which communicate with the space in which the dispenser is disposed are respectively formed in the lower substrate, the lower transparent conductive layer, and the lower electrode, and the lower electrode comprises a window which is located near the through hole and where an electrode is not formed.

2. The touch panel of claim 1, wherein the window is elongated to an outside direction of the space in which the dispenser is disposed near the through hole which is formed in the lower electrode.

3. The touch panel of claim 1, wherein the window is provided as a plural and the plural windows are radially arranged.

4. A method for manufacturing a touch panel comprising:
patterning an upper transparent conductive layer on a bottom surface of an upper substrate;
forming a plurality of upper electrodes on a bottom surface of the upper transparent conductive layer;
patterning a lower transparent conductive layer on a top surface of a lower substrate;
forming a plurality of lower electrodes on a top surface of the lower transparent conductive layer;
forming a dot spacer on a top surface of the lower transparent conductive layer of the lower substrate;
attaching the upper substrate and the lower substrate together by adhering a double-sided adhesive tape to the upper electrode and the lower electrode respectively; and
forming a dispenser which electrically connects a portion of the plurality of the upper electrodes and the a portion of the plurality of the lower electrodes,
wherein the double adhesive tape forms a space which elongates vertically in which the dispenser is disposed, through holes which communicate with the space in which the dispenser is disposed are respectively formed in the lower substrate, the lower transparent conductive layer, and the lower electrode, and the lower electrode comprises a window which is located near the through hole and where an electrode is not formed.

5. The method of claim 4, wherein the window is elongated to an outside direction of the space in which the dispenser is disposed near the through hole which is formed in the lower electrode.

6. The method of claim 4, wherein the window is provided as a plural and the plural windows are radially arranged.
